# EUROPÄISCHE PATENTANMELDUNG

(11) **EP 1 734 469 A2**
(43) Veröffentlichungstag der Anmeldung: **20.12.2006**
(21) Anmeldenummer: 06115196.5
(22) Anmeldetag: 09.06.2006
(51) Int. Cl.: G06Q 10/00

(54) **Verfahren zur Auswahl von Datensätzen**

(30) Priorität: 14.06.2005 DE 102005027575
(71) Anmelder: Travel Tainment AG, 52080 Aachen (DE)
(72) Erfinder: Szlachcic, Jaroslaw, 52080 Aachen (DE); Schmitz, Lothar, 52146 Würselen (DE); Usbeck, Ralf, 52076 Aachen (DE); Pfau, Markus, 52076 Aachen (DE)
(74) Vertreter: Weisse, Renate

(57) **Zusammenfassung**

Die Erfindung betrifft ein Verfahren zur Auswahl von Hotel- oder Reise-Datensätzen, die vorgegebenen Auswahlkriterien entsprechen, aus einer im Arbeitsspeicher einer Datenverarbeitungsanlage gespeicherten Datenbank. Die Datenbank besteht aus mehreren Unterdatenbanken, welche jeweils mit einer eigenen Suchmaschine durchsuchbar sind, und für die Steuermittel zur Steuerung der Suchmaschinen vorgesehen sind. Das Verfahren umfasst die Schritte: Erstellen einer indizierten globalen Liste aus vollständigen Hotel- oder Reise-Datensätzen, in welcher alle Hotels in nichtredundanter Form repräsentiert sind; Speichern von Datensätzen, welche die Informationen der Hotel- oder Reisedatensätze repräsentieren, zusammen mit dem der globalen Liste entsprechenden Index in Unterdatenbanken in der Reihenfolge der globalen Liste; Gleichzeitiges Durchsuchen der Unterdatenbanken bis ein erster Treffer erzielt wird, der den vorgegebenen Auswahlkriterien entspricht; Erstellen einer Ergebnisliste, in welche der Treffer aus der Unterdatenbank mit dem kleinsten Index eingetragen wird; Gleichzeitiges Durchsuchen aller Unterdatenbanken, in welchen dieser Treffer erzielt wurde, bis ein weiterer Treffer erzielt wird, der den vorgegebenen Auswahlkriterien entspricht; Eintragen des Treffers mit dem kleinsten Index in die Ergebnisliste; und Wiederholen dieser Vorgehensweise bis alle Unterdatenbanken vollständig durchsucht sind.

## Beschreibung

### Technisches Gebiet

Die Erfindung betrifft ein Verfahren zur Auswahl von Hotel- oder Reise-Datensätzen, die vorgegebenen Auswahlkriterien entsprechen, aus einer im Arbeitsspeicher einer Datenverarbeitungsanlage gespeicherten Datenbank.

Hotel- oder Reise-Datensätze enthalten Informationen zu den Eigenschaften von Reiseangeboten, z.B. Anbieter, Abflughafen, Reisedatum, Zielort, Hotelname und Preis. Diese Eigenschaften werden dann als Datensatz in einer Datenbank abgelegt. Auf die Datenbank kann mit Hilfe eines geeigneten Programms sequentiell zugegriffen werden, wenn eine Datenbankabfrage erfolgt. Dabei wird zunächst der Datensatz eingelesen. Dann wird der Datensatz mit vorgegebenen Auswahlkriterien verglichen und als Treffer gespeichert, wenn die Auswahlkriterien erfüllt sind. Eine solche Hotel- oder Reise-Datenbank kann mehrere Millionen Datensätze enthalten. Entsprechend vergeht auch bei hohen Rechnerleistungen und kurzen Zugriffszeiten auf den Datenspeicher eine gewisse Zeitspanne, bis die Ergebnisse vorliegen und ausgegeben werden. Die Ausgabe erfolgt zum Beispiel auf einem Bildschirm, in einer Datei oder über einen Drucker. Das Programm, mit welchem auf die Datenbank zugegriffen wird, wird auch als Suchmaschine bezeichnet.

### Stand der Technik

Auf der Intemetseite "http://www.bucherreisen.de/" ist am 12.Dezember 2002 eine Suchmaschine für Ferienreisen offenbart. Die Suchmaschine ermöglicht die Auswahl einer Reise aus einer Datenbank mit über einer Million Reiseangeboten. Dabei können folgende Auswahlkriterien angegeben werden: "Flug und Hotel, bzw. Nur Flug", "Reiseziel", "Anzahl der mitreisenden Erwachsenen und Kinder", "Abflughafen", "Aufenthaltsdauer", "Preis", "Früheste Hinreise und späteste Rückreise", "Hotelkategorie" und "Verpflegung".

Durch Aktivierung eines Feldes "Angebot finden" wird nach der Eingabe geeigneter Auswahlkriterien die Datenbankabfrage durchgeführt. Die Suchergebnisse werden gewöhnlich nach dem Preis sortiert. Unabhängig von der Anfrage sind in jedem Fall Antwortzeiten im Sekunden-Bereich üblich, auch wenn kein Treffer erzielt wird. Wird kein Treffer erzielt, so muss die Anfrage wiederholt werden, was zu weiteren Wartezeiten führt. Dies kann zur Überlastung des Datenbankrechners und der Kommunikationswege führen. In jedem Fall aber muss ein erhöhter technischer Aufwand betrieben werden, um die hohe Anzahl der Anfragen zu bearbeiten.

In der DE 102 59 206.3 ist ein Verfahren zur beschleunigten Auswahl einer Reise aus einer Datenbank ausführlich beschrieben. Dabei werden die Daten bereits vor der Abfrage in geeigneter Form im Arbeitsspeicher abgelegt, so dass eine besonders schnelle Suche möglich ist. Ein Zugriff auf den Festspeicher ist nicht erforderlich. Durch die dort beschriebene Technologie wird der erforderliche Speicherplatz reduziert.

Der Arbeitsspeicher (Hauptspeicher) ist prinzipiell physikalisch begrenzt. Bei der verwendeten 32-bit-Technologie ist der nutzbare Speicher einer einzelnen Anwendung zum Beispiel auf eine Speicherkapazität von ca. 1,2 Gb begrenzt. So können bei einem 32-bit-Betriebssystem, wie sie derzeit verwendet werden, lediglich ca. 1,2 Gb von einer einzelnen Anwendung genutzt werden, selbst wenn ein größerer Arbeitsspeicher von beispielsweise 4 Gb zur Verfügung steht. Dadurch ist die Leistungsfähigkeit der Anwendung begrenzt.

Es besteht jedoch die Möglichkeit, mehrere Anwendungen einzusetzen. Einerseits wird dadurch das Problem der physikalischen Speichergrenze umgangen, da jeder einzelnen Anwendungen eine nutzbare Speicherkapazität von ca. 1,2 Gb zur Verfügung steht, andererseits wird durch die parallele Bearbeitung mehrerer Arbeitsabläufe gerade auf Mehrprozessorsystemen eine weitaus höhere Performance erreicht. Problematisch ist es jedoch, dass jede Anwendung eine eigene Trefferliste erzeugt. Die unterschiedlichen Trefferlisten müssen dann erneut miteinander verglichen werden und eine gemeinsame Ergebnisliste erzeugt werden. Dadurch wird die Ausgabe des Suchergebnisses wieder verzögert, so dass insgesamt bei erhöhtem Aufwand nur eine geringe Beschleunigung der Suche bewirkt wird.

### Offenbarung der Erfindung

Es ist Aufgabe der Erfindung, ein Verfahren der eingangs genannten Art zu schaffen, bei welchem die Daten schneller verarbeitet werden können.

Erfindungsgemäß wird die Aufgabe dadurch gelöst, dass die Datenbank aus mehreren Unterdatenbanken besteht, welche jeweils mit einer eigenen Suchmaschine durchsuchbar sind, Steuermittel zur Steuerung der Suchmaschinen vorgesehen sind, und die Suche mit den folgenden Schritten erfolgt:
(a) Erstellen einer indizierten globalen Liste aus vollständigen Hotel- oder Reise-Datensätzen, in welcher alle Hotels in nicht-redundanter Form repräsentiert sind;
(b) Speichern von Datensätzen, welche die Informationen der Hotel- oder Reisedatensätze repräsentieren, zusammen mit dem der globalen Liste entsprechenden Index in Unterdatenbanken in der Reihenfolge der globalen Liste;
(c) Gleichzeitiges Durchsuchen der Unterdatenbanken bis ein erster Treffer erzielt wird, der den vorgegebenen Auswahlkriterien entspricht;
(d) Erstellen einer Ergebnisliste, in welche der Treffer aus der Unterdatenbank mit dem kleinsten Index eingetragen wird;
(e) Gleichzeitiges Durchsuchen aller Unterdatenbanken, in welchen dieser Treffer erzielt wurde, bis ein weiterer Treffer erzielt wird, der den vorgegebenen Auswahlkriterien entspricht;
(f) Eintragen des Treffers mit dem kleinsten Index in die Ergebnisliste;
(g) Wiederholen der Schritte (e) und (f) bis alle Unterdatenbanken vollständig durchsucht sind.

Die einfachste Indizierung der Hotels in der globalen Liste ist eine Nummerierung. Es versteht sich, dass die Suchrichtung auch umgekehrt werden kann und dann nicht der Treffer mit dem kleinsten, sondern mit dem größten Index in die Ergebnisliste eingetragen wird.

Die Bildung der Unterdatenbanken kann willkürlich erfolgen. Die Bildung der Unterdatenbanken kann aber auch z.B. so erfolgen, dass alle Reisen eines Anbieters in einer Unterdatenbank vorliegen. Alternativ können die Unterdatenbanken so aufgebaut sein, dass in einer Datenbank lediglich Reisen vorliegen, die ein Pauschalreisearrangement darstellen, in einer weiteren Datenbank "nur Hotel" - "nur Flug" -Kombinationen und in einer dritten Datenbank Last-Minute-Reisen.

Bei dem Verfahren arbeiten mehrere Suchmaschinen, d.h. mehrere Anwendungen, gleichzeitig. Die Steuermittel können von einem Steuerprogramm gebildet sein, das die Suchmaschinen für die Suche in den Unterdatenbanken startet oder anhält und das die Treffer aus einem gemeinsamen Speicher ausliest, in welchem die Suchmaschine diese speichert.

Das Programm startet zunächst alle Suchmaschinen. Alle Suchmaschinen suchen, bis sie einen ersten Treffer erzielt haben. Der Treffer mit der kleinsten Nummer, d.h. das Hotel, das "am weitesten oben" in der globalen Liste steht, wird in die Ergebnisliste eingetragen. Da die Datensätze redundant vorliegen können, besteht die Möglichkeit, dass der gleiche Treffer, z.B. das gleiche Hotel, in mehreren Unterdatenbanken gefunden wird. Das Steuerprogramm startet dann alle Suchmaschinen, in denen dieser erste Treffer erfolgt ist, bis diese wieder einen Treffer haben.

Anschließend werden wieder alle Treffer verglichen. Dabei werden nicht nur die Treffer aus den zuletzt aktivierten Suchmaschinen berücksichtigt, sondern auch die Treffer der Suchmaschinen, die bei der zuletzt erfolgten Suche nicht berücksichtigt wurden, weil die Hotelnummer größer war als eine andere. Es wird erneut der Treffer mit der kleinsten Hotelnummer in die Ergebnisliste eingetragen und alle Suchmaschinen, bei denen dieser Treffer vorlag gestartet. Da eine große Anzahl an Datensätzen sich auf identische Hotels oder Reisen bezieht, arbeiten die Suchmaschinen überwiegend parallel. Auf diese Weise werden die Daten mit mehreren Suchmaschinen gleichzeitig durchsucht. Die Arbeitsweise, bei der die Treffer von den Steuermitteln oder den Suchmaschinen in eine gemeinsame Ergebnisliste geschrieben werden, vermeidet einen aufwändigen Vergleich von Ergebnislisten um zu einer endgültigen Ergebnisliste zu gelangen. Vielmehr ist die Ergebnisliste bereits bei ihrer Erstellung ausgabereif. Es kann selbstverständlich eine anschließende Sortierung der Ergebnisse nach einem auswählbaren Sortierschlüssel erfolgen. Es liegen aber trotz des Einsatzes mehrerer Suchmaschinen zumindest keine redundanten Datensätze vor.

Es besteht die Möglichkeit, Treffer mit gleichem Index aber in unterschiedlichen Unterdatenbanken vor dem Eintrag in die Ergebnisliste bezüglich weiterer Kriterien zu sortieren. Dies ist sinnvoll, wenn ein Hotel z.B. verschiedene Zimmerkategorien aufweist. Dann werden die Treffer aus den unterschiedlichen Unterdatenbanken bezüglich der Zimmerkategorie sortiert und in der Liste entsprechend ausgegeben. Weiterhin können die Treffer bezüglich des Preises, des Veranstalters oder einem anderen Kriterium sortiert und anschließend nur jeweils das beste in die Ergebnisliste aufgenommen werden.

Vorzugsweise sind alle Unterdatenbanken im gleichen Arbeitsspeicher vorgesehen. Das Steuerprogramm und die Suchmaschinen haben dann einen gemeinsamen Speicher (shared memory), der von dem Steuerprogramm lediglich gelesen werden kann und in den die Suchmaschinen die Treffer schreiben.

In einem besonders bevorzugten Ausführungsbeispiel liegen die Datensätze vollständig mit allen Informationen in der globalen Hotelliste vor. Die Unterdatenbanken werden in einer Form gespeichert, die eine besonders schnelle Suche erlaubt. Eine solche Form ist zum Beispiel so ausgestaltet, dass die jeweils für einen Parameter vorkommende Werte in einer Liste gespeichert werden. In der Datenbank werden dann lediglich ganzzahlige Werte gespeichert, die angeben, an welcher Stelle der Wert in der Liste steht. Dadurch wird die Datenmenge, die durchsucht werden muss, und der erforderliche Speicherplatz wesentlich reduziert. Wird ein Treffer erzielt, so kann die Information auf leichte Weise aus den Listen oder aus der globalen Hotelliste wieder erhalten werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist ein Beispiel für eine Datenbank, wie sie ursprünglich vorliegt.
- Fig.2a: zeigt Listen zur Gruppierung von Daten
- Fig.2b: zeigt Daten, welche mit Hilfe der Listen aus Fig.2a gruppiert wurden
- Fig.3: zeigt eine Eingabemaske für Auswahlkriterien

### Beschreibung des Ausführungsbeispiels

Bei den Daten des Ausführungsbeispiels handelt es sich um typische Reiseangebote, von denen mehrere Millionen Datensätze in einer Datenbank verarbeitet werden. Die Reisen sollen für einen Nutzer online im Internet buchbar sein. Entsprechend ist es das Ziel, dem Nutzer möglichst nur solche Reisen aus der Datenbank anzubieten, die seinen Wünschen möglichst gut entsprechen. Die Ergebnisliste soll in möglichst kurzer Zeit angezeigt werden.

Die Datenbank setzt sich aus mehreren Millionen Einträgen zusammen. Jeder Eintrag entspricht einer buchbaren Reise mit bestimmten Eigenschaften. Eigenschaften von Pauschalreisearrangements oder Last-Minute-Angeboten sind der Reiseveranstalter, Abflughafen, Abflugdatum, Reisedauer, Zielort, Hotelkategorie, Hotelname, Art der Unterkunft, Verpflegung, Ausstattung des Hotels, Entfernung zum Strand, Sportangebot, Kinderfreundlichkeit (z.B. Kinderbetreuungsmöglichkeiten), Preis und Anzahl der Mitreisenden. Die Daten werden täglich aktualisiert, da Reisen ausgebucht sein können, aus anderen Gründen nicht mehr zur Verfügung stehen oder neue Reisen hinzukommen. Entsprechend ändert sich die Anzahl der Reisen und damit die Anzahl der Datensätze.

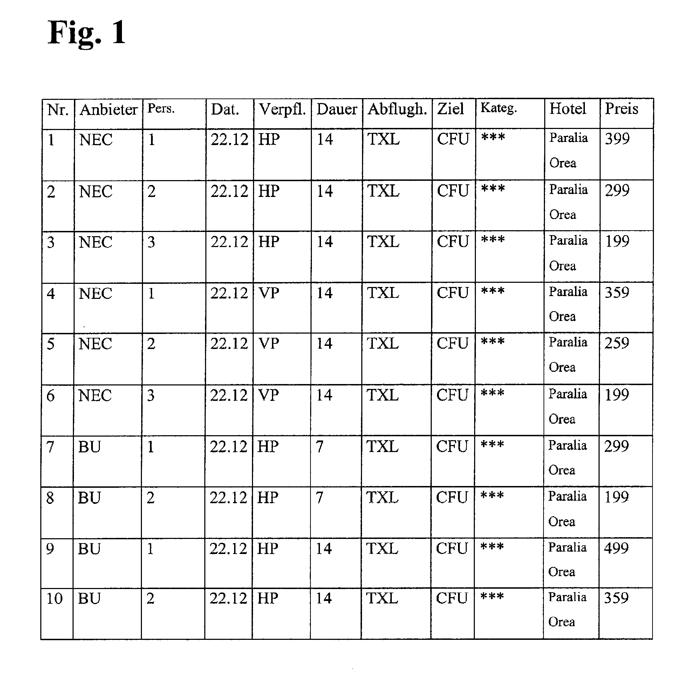

Ein Beispiel für einen Ausschnitt aus einer solchen Datenbank für Pauschalreisearrangements ist in Fig. 1 gezeigt. Die Datenbank weist 10 unterschiedliche Datensätze auf. Jeder Datensatz ist mit den vollständigen Informationen in einer Zeile gespeichert.

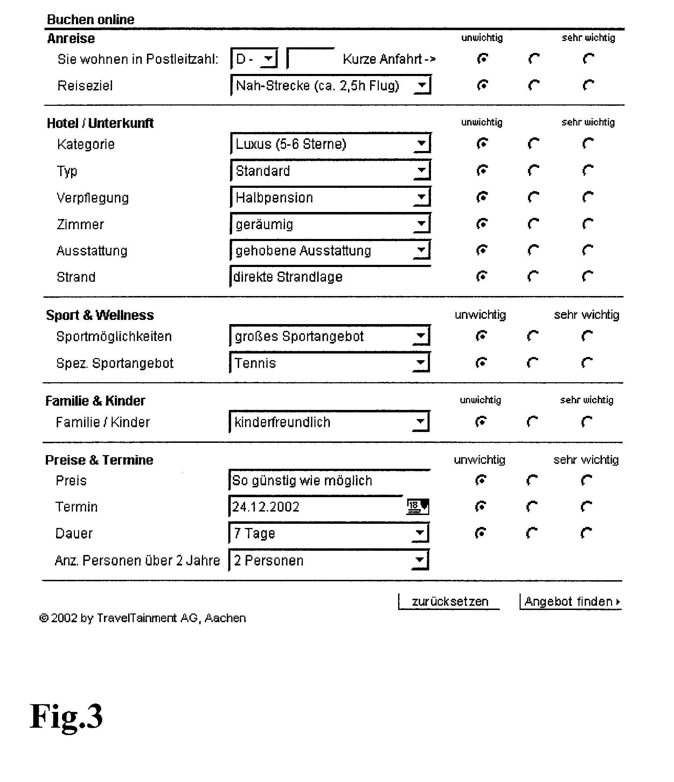

Aus dieser Datenbank soll nun ein Nutzer die Reise auswählen, die seinen Vorstellungen am ehesten entspricht. Hierfür kann er Auswahlkriterien mittels einer Abfrageoberfläche über das Internet eingeben und die Datenbank durchsuchen. Ein Beispiel für eine solche Abfrageoberfläche ist in Fig. 3 dargestellt.

Da die Datenbank sehr viele Datensätze enthält, würde ein direkter Zugriff durch den Nutzer sehr lange Zeit in Anspruch nehmen. Die Datenbank wird daher zunächst für die Nutzung vorbereitet und in vorbereiteter Form abgespeichert. Hierfür werden Listen erstellt. In jeder Liste befinden sich die Daten, die in den verschiedenen Spalten der Datenbank auftreten. So werden für den vorliegenden Fall 10 Listen entsprechend den 10 Parametern (Spalten) ohne die Indexspalte erstellt.

Die erste Liste ist die Anbieterliste. In dieser Liste sind alle vorkommenden Anbieter aufgezählt. Im vorliegenden Fall lautet die Liste: {NEC; BU}. An erster Stelle der Anbieterliste ist der Anbieter mit der Kurzbezeichnung "NEC" und an zweiter Stelle ist der Anbieter mit der Kurzbezeichnung "BU" angegeben. Statt NEC kann also auch in der neuen, vorbereiteten Datenbank "0" stehen, entsprechend dem ersten Wert der Anbieterliste und statt "BU" kann "1" stehen. Diese Werte sind Boolsche Werte oder Integer und sind im binomischen Zahlensystem mit wesentlich weniger Stellen darstellbar als Strings. Entsprechend verringert sich an dieser Stelle nicht nur der benötigte Speicherplatz, sondern auch die Auslesezeit. Anders ausgedrückt: "1" lässt sich im Computer wesentlich schneller lesen als "BU" und nimmt weniger Speicherplatz ein. Wenn nur zwei Werte vorliegen, reicht ein Feld mit einem Boolscher Wert 0 oder 1 aus, um eine hinreichende Charakterisierung einer Eigenschaft in Verbindung mit der zugehörigen Liste zu erreichen.

Das gleicher Verfahren wird auf die übrigen Dateninhalte angewendet. Die Personenliste entsprechend Spalte 3 lautet im vorliegenden Fall: {1; 2; 3}. Die Datumsliste weist nur einen Wert auf {22.12}. Wenn, wie hier, nur ein Wert vorliegt, braucht dieser Wert nicht mehr in der der neuen Datenbank entsprechenden Matrix gespeichert werden. Es reicht aus, wenn die Liste mit dem Wert gespeichert ist. Die Verpflegungsliste lautet {VP; HP}. Wird in der neuen Datenbank entsprechend eine Verpflegung "0" angegeben, so bedeutet dies, dass Vollpension angeboten wird. Bei "1" bedeutet dies hingegen, dass Halbpension (HP) angeboten wird. Auch dieser Wert kann statt als String in Form eines Integers oder gar als Boolscher Wert in die Matrix eingetragen werden.

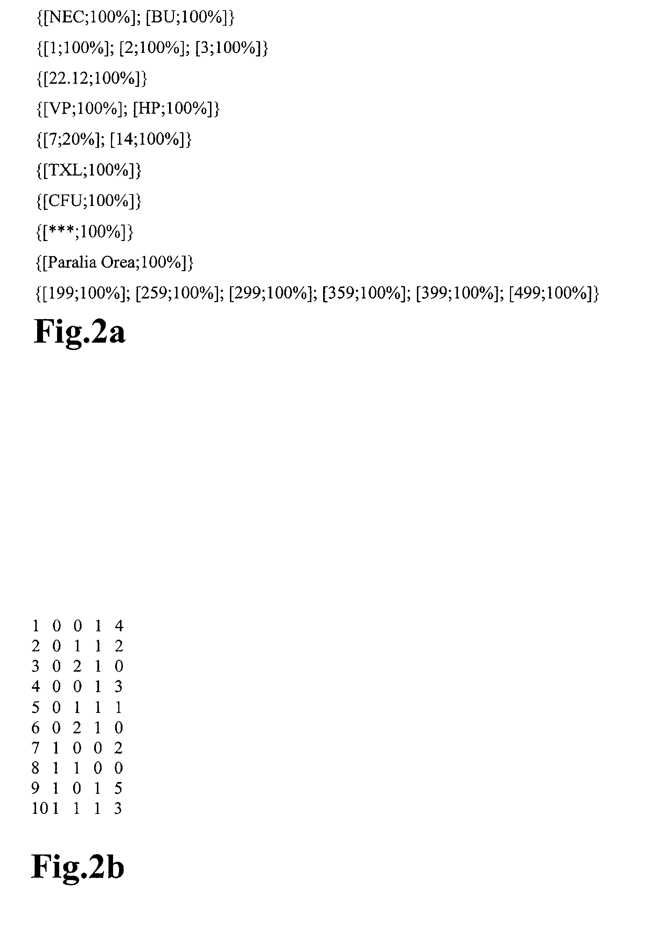

Zusammen mit diesen in Fig.2a aufgeführten Listen lässt sich die in Fig.1 dargestellte Datenbank zusammenfassen und erhält dann die Form einer Matrix, wie sie in Fig. 2b dargestellt ist. Die Matrix enthält 10 Zeilen und nur 5 Spalten und besteht ausschließlich aus kleinen Zahlen. Sie ist auch im Praxisfall bei großen Datenmengen klein genug, um vollständig in den Arbeitsspeicher einlesbar zu sein. Es ist leicht einzusehen, dass eine solche Matrix wesentlich schneller auszulesen ist, als eine Datenbank auf einer Festplatte, wie sie in Fig. 1 dargestellt ist. Die Zugriffszeiten werden daher wesentlich reduziert, ohne den Informationsgehalt der Datenbank zu beschränken. Dabei gehören zu der Datenbank selbstverständlich immer die Indexlisten, welche in Fig.2a nochmals gesondert dargestellt sind.

Neben den Pauschalreisearrangements, die bereits vor der Saison zusammengestellt werden, werden auch Last-Minute-Angebote, reine Hotel-Angebote, oder Kombinationen aus "Nur-Flug" und "Nur-Hotel" angeboten. Das gleiche Hotel kann also in verschiedenen Angebotsformen angeboten werden. Dem Online-Nutzer soll nun eine einzige Ergebnisliste angezeigt werden, in der alle angebotenen Daten berücksichtigt werden. Die verschiedenen Datensätze werden nicht in einer einzigen Datenbank organisiert, sondern als Unterdatenbanken getrennt voneinander abgespeichert. Jede dieser Unterdatenbanken wird in der Form, wie sie anhand von Fig.2 illustriert ist, im Arbeitsspeicher gespeichert.

Weiterhin wird eine globale Hotelliste erstellt, in der jedes Hotel nur einmal aufgeführt und mit einer laufenden Nummer versehen ist. In der globalen Hotelliste können auch die zu dem Hotel gehörigen Informationen gespeichert werden. Solche Informationen ist z.B. die Hotelbeschreibung.

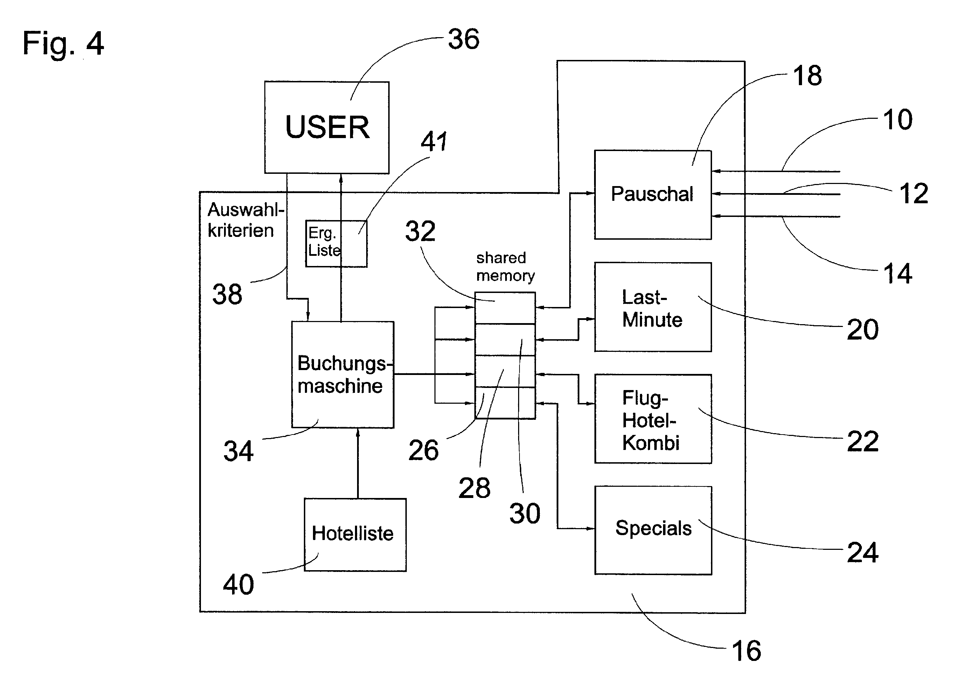

Der Verfahrensablauf zur Erstellung der Ergebnisliste ist nun anhand von Fig.4 dargestellt.

Zunächst werden die Datensätze der verschiedenen Veranstalter, repräsentiert durch Pfeile 10, 12 und 14 aufgenommen. Diese Daten liegen zum Beispiel im Format in Fig.1 vor. Die Daten werden auf das in Fig.2 dargestellte Format konvertiert und im Arbeitsspeicher 16 abgelegt. Es sind vier Speicherbereiche für vier Unterdatenbanken 18, 20, 22 und 24 vorgesehen. Für jede der Unterdatenbanken 18, 20, 22 und 24 ist eine eigene Suchmaschine vorgesehen. Die Suchmaschine ist ein Programm, das die zugehörige Unterdatenbank entsprechend den vorgegebenen Auswahlkriterien durchsucht und Treffer in einen gemeinsamen Speicher 26, 28, 30 bzw. 32 schreibt.

Als Steuerprogramm ist eine Buchungsmaschine 34 vorgesehen. Der User 36 gibt über ein Menü, wie es in Fig. 3 dargestellt ist, Auswahlkriterien ein, die an die Buchungsmaschine übertragen werden. Dies ist durch einen Pfeil 38 repräsentiert. Anhand der Auswahlkriterien wird die Suche mit der Suchmaschine durchgeführt. Die Treffer werden in einer Ergebnisliste 41 zusammengestellt und dem User zur weiteren Auswahl zur Verfügung gestellt.

Zur Beschleunigung der Suche steuert die Buchungsmaschine 34 die Suchmaschinen wie folgt:

Die Hotels sind in den Unterdatenbanken in der gleichen Reihenfolge abgelegt, wie in der globalen Hotelliste. Alle Suchmaschinen werden gleichzeitig gestartet und die Unterdatenbanken 18, 20, 22 und 24 durchsucht bis ein erster Treffer erzielt wird. Angenommen, die erste Suchmaschine findet in der Unterdatenbank 18 Hotel Nr. 18 als Treffer. Die zweite Suchmaschine findet in der Unterdatenbank 208 Hotel Nr. 25 als Treffer. Die dritte Suchmaschine findet wiederum Hotel Nr. 18 als Treffer und die vierte Suchmaschine Hotel Nr. 8.

Die Ergebnisse werden in die zugehörigen gemeinsamen Speicher 26, 28, 30 und 32 geschrieben. Nun vergleicht die Buchungsmaschine die Treffernummern. Die vierte Suchmaschine hat den Treffer mit der kleinsten Nummer, nämlich Nr.8, gefunden. Für diesen Treffer werden die Hoteldaten aus der globalen Hotelliste 40 gelesen und in die Ergebnisliste 41 geschrieben. Keine der anderen Unterdatenbanken hat ein Angebot für dieses Hotel.

Anschließend startet die Buchungsmaschine die Suchmaschine für die Unterdatenbank 24. Diese sucht nun weiter, bis sie wiederum einen Treffer erzielt. Angenommen dieser Treffer sei auch Hotel Nr. 18. Es werden nun die beiden Angebote für Hotel Nr.18 aus den Unterdatenbanken 18 und 22 aus der ersten Suche und das Angebot aus der Unterdatenbank 24 aus dem zweiten Suchlauf verglichen. Diese Angebote werden nun bezüglich des Preises verglichen und das Angebot mit dem niedrigsten Preis in die Ergebnisliste geschrieben. Die Buchungsmaschine startet nun die Suchmaschinen für die drei Unterdatenbanken 18, 22 und 24 gleichzeitig. Auf diese Weise wird erreicht, dass direkt nur eine Ergebnisliste erzeugt wird und die Suche durch den gleichzeitigen Betrieb mehrerer Suchmaschinen wesentlich schneller ist. Es kann mehr Speicherplatz simultan adressiert werden, so dass die eingangs erwähnte Begrenzung überwunden wird. Die Buchungsmaschine schreibt im folgenden immer das Hotel mit der kleinsten Nummer in die Ergebnisliste und lässt die Suchmaschine, die diesen Treffer erzielt hat weitersuchen. So können alle Daten parallel durchsucht werden. Die Ergebnisliste kann dann dem User zur Verfügung gestellt werden.

Es besteht die Möglichkeit, dass für das gleiche Hotel unterschiedliche Treffer erzielt werden. So kann für das gleiche Hotel zum Beispiel ein Einzel- oder ein Doppelzimmer angeboten werden. In der globalen Hotelliste sind diese Daten nicht angegeben. In diesen Fällen werden beide Treffer in die Ergebnisliste eingetragen und es erfolgt eine Sortierung der für das gleiche Hotel gefundenen Treffer entsprechend ausgewählten Sortierkriterien.

## Patentansprüche

1. Verfahren zur Auswahl von Hotel- oder Reise-Datensätzen, die vorgegebenen Auswahlkriterien entsprechen, aus einer in im Arbeitsspeicher (16) einer Datenverarbeitungsanlage gespeicherten Datenbank, wobei die Datenbank aus mehreren Unterdatenbanken (18, 20, 22, 24) besteht, welche jeweils mit einer eigenen Suchmaschine durchsuchbar sind, und für die Steuermittel (34) zur Steuerung der Suchmaschinen vorgesehen sind, mit den Schritten:
(a) Erstellen einer indizierten globalen Liste (40) aus Hotel-Datensätzen, in welcher alle Hotels in nicht-redundanter Form repräsentiert sind;
(b1) Indizieren und, falls die Datensätze noch nicht in sortierter Form vorliegen, Sortieren der Datensätze, welche die Informationen der Hotel- oder Reisedatensätze repräsentieren, in der Reihenfolge der globalen Liste (40) mit dem der globalen Liste entsprechenden Index;
(b2) Speichern der so indizierten und sortierten Datensätze in neuen Unterdatenbanken (18, 20, 22, 24) in der Reihenfolge der globalen Liste (40) im Arbeitsspeicher (16);
(b) Speichern von Datensätzen, welche die Informationen der Hotel- oder Reisedatensätze repräsentieren, zusammen mit dem der globalen Liste entsprechenden Index in Unterdatenbanken (18, 20, 22, 24) in der Reihenfolge der globalen Liste (40);
(c) Gleichzeitiges Durchsuchen der neuen Unterdatenbanken (18, 20, 22, 24) jeweils mit einer eigenen Suchmaschine, die mit Steuermitteln (34) zur Steuerung der Suchmaschinen gesteuert werden, bis für jede Unterdatenbank jeweils ein erster Treffer erzielt wird, der den vorgegebenen Auswahlkriterien entspricht;
(d) Erstellen einer Ergebnisliste (41), in welche der Treffer aus den neuen Unterdatenbanken mit dem kleinsten Index eingetragen wird;
(e) Gleichzeitiges Durchsuchen aller neuen Unterdatenbanken, in welchen dieser Treffer erzielt wurde, bis ein weiterer Treffer erzielt wird, der den vorgegebenen Auswahlkriterien entspricht;
(f) Eintragen des Treffers mit dem kleinsten Index in die Ergebnisliste (41);
(g) Wiederholen der Schritte (e) und (f) bis alle neuen Unterdatenbanken vollständig durchsucht sind.

2. Verfahren nach Anspruch 1, **dadurch gekennzeichnet, dass** Treffer mit gleichem Index aber in unterschiedlichen Unterdatenbanken vor dem Eintrag in die Ergebnisliste (41) bezüglich weiterer Kriterien sortiert werden.

3. Verfahren nach Anspruch 1 oder 2, **dadurch gekennzeichnet, dass** alle neuen Unterdatenbanken (18, 20, 22, 24) im gleichen Arbeitsspeicher (16) gespeichert werden vorgesehen sind.

4. Verfahren nach einem der vorgehenden Ansprüche, **dadurch gekennzeichnet, dass** die Steuermittel von einem Steuerprogramm (34) gebildet sind, das die Suchmaschinen für die Suche in den Unterdatenbanken startet oder anhält und das die Treffer aus einem gemeinsamen Speicher (26., 28, 30, 32) ausliest, in welchem die Suchmaschine diese speichert.
